**Europäisches Patentamt**

**European Patent Office**

**Office européen des brevets**

(19)

(11) Veröffentlichungsnummer: **0 026 855**
**B1**

(12)

# EUROPÄISCHE PATENTSCHRIFT

(45) Veröffentlichungstag der Patentschrift:
04.01.84

(21) Anmeldenummer: 80105442.0

(22) Anmeldetag: 12.09.80

(51) Int. Cl.³: **A 01 D 33/08**

(54) **Verfahren und Vorrichtung zur Feldreinigung von Rodungsfrüchten.**

(30) Priorität: 22.09.79 DE 2938439

(43) Veröffentlichungstag der Anmeldung:
15.04.81 Patentblatt 81/15

(45) Bekanntmachung des Hinweises auf die Patenterteilung:
04.01.84 Patentblatt 84/1

(84) Benannte Vertragsstaaten:
AT BE DE FR GB IT NL SE

(56) Entgegenhaltungen:
DE - A - 2 042 467
DE - A - 2 635 045
DE - A - 2 655 781
DE - C - 758 181
DE - U - 7 727 630
FR - A - 1 183 898
US - A - 2 635 614

(73) Patentinhaber: Dietrich, Martin, Paternoster 5,
D-8851 Mertingen (DE)

(72) Erfinder: Dietrich, Martin, Paternoster 5,
D-8851 Mertingen (DE)

(74) Vertreter: Munk, Ludwig, Dipl.-Ing.,
Prinzregentenstrasse 1, D-8900 Augsburg (DE)

Verfahren und Vorrichtung zur Feldreinigung von Rodungsfrüchten

Die Erfindung betrifft nach einem ersten übergeordneten Erfindungsgedanken ein Verfahren zur Feldreinigung von Rodungsfrüchten, insbesondere Zuckerrüben, die nach der Rodung durch Strahlen eines Reinigungsmittels allseitig beaufschlagt werden. Ein weiterer übergeordneter Erfindungsgedanke bezieht sich auf eine Vorrichtung zur Durchführung dieses Verfahrens.

Ein Verfahren mit den gattungsgemässen Merkmalen ist aus der DE-A-2 655 781 bekannt. Bei diesem bekannten Verfahren findet Luft als Reinigungsmittel Verwendung. Dieses bekannte Verfahren lässt für viele Einsatzfälle zufriedenstellende Ergebnisse erwarten. Nachteilig kann sich jedoch der hohe Luftverbrauch auswirken, insbesondere wenn hohe Durchsatzmengen von zu reinigenden Rodungsfrüchten verkraftet werden müssen, was beispielsweise bei mehrscharigen Erntegeräten der Fall ist. Ein weiteres Problem kann hierbei die Beherrschung der Staubentwicklung, insbesondere bei trockenen Böden, darstellen.

Aus der US-A-2 635 614 ist ein Reinigungsverfahren für Rodungsfrüchte bekannt, bei dem Wasser in Form kontinuierlicher Druckstrahlen auf die Rodungsfrüchte einwirkt. Hierbei ist zwar ein hoher Reinigungseffekt zu erreichen und eine Staubentwicklung nicht zu befürchten. Dieses bekannte Verfahren stellt jedoch kein Verfahren zur Feldreinigung dar, das unmittelbar nach dem Rodevorgang durchgeführt wird. Vielmehr handelt es sich hierbei um ein Reinigungsverfahren, das stationär erst unmittelbar vor der Weiterverarbeitung der Rodungsfrüchte in einem Verarbeitungsbetrieb stattfindet. Hierbei fällt Ackerboden, der ungefähr 50% des Erntegewichts betragen kann, als Ballast an und führt nicht nur zu Beseitigungsproblemen im Verarbeitungsbetrieb sondern auch zu einem nicht unerheblichen Verlust an Boden im Bereich der abgeernteten Äcker. Es wurde daher schon vorgeschlagen, diesen Boden vom Verarbeitungsbetrieb wieder auf die Äcker zurückzuführen. Der Transportaufwand für den Transport von Ballast vom Acker zum Betrieb und wieder zurück ist jedoch sehr hoch. Das Verfahren gemäss US-A-2 635 614 ist bereits aus diesem Grunde einer Feldreinigung unterlegen.

Das beim bekannten Verfahren gemäss US-A-2 635 614 zur Verwendung kommende Wasser wird aus einem Leitungsnetz entnommen. Bei mobilem Einsatz auf dem Felde stünde jedoch ein derartiges Leitungsnetz nicht zur Verfügung. Das dürfte auch der Grund dafür sein, weshalb die Nassreinigung von Rodungsfrüchten direkt auf dem Felde bisher nicht in Betracht gezogen wurde und warum für die Feldreinigung von Rodungsfrüchten bisher nur trockene Reinigungsverfahren in Vorschlag gebracht wurden, wie die eingangs diskutierte DE-A-2 655 781 zeigt, die jedoch mit den in diesem Zusammenhang angesprochenen Problemen behaftet sind.

Hiervon ausgehend ist es daher eine übergeordnete Aufgabe der vorliegenden Erfindung ein Nassreinigungsverfahren zum Reinigen von Rodungsfrüchten zu schaffen, das sich für mobilen Einsatz direkt auf dem Felde eignet und bei dem die Nachteile der bekannten Trockenreinigungsverfahren nicht zu befürchten sind. Eine weitere übergeordnete Aufgabe der vorliegenden Erfindung ist es, eine einfache und kostengünstige Vorrichtung zur Durchführung des Verfahrens zur Verfügung zu stellen.

Die Lösung der erstgenannten, übergeordneten Aufgabe besteht erfindungsgemäss darin, dass das Reinigungsmittel zum überwiegenden Teile eine Flüssigkeit, vorzugsweise Wasser, ist, die zumindest teilweise während des Rodevorgangs mittels einer Gewinnungsanlage aus der Umgebung gewonnen und in den Reinigungsprozess eingespeist wird.

Die Gewinnung der Reinigungsflüssigkeit aus der Umgebung gewährleistet in vorteilhafter Weise eine volle Unabhängigkeit von einer Fremdversorgung mit Flüssigkeit und gestattet somit eine mobile Feld-Nassreinigung von Rodungsfrüchten direkt nach der Rodung. Die Reinigungsflüssigkeit schwemmt dabei nach Beaufschlagung der zu reinigenden Rodungsfrüchte den hiervon entfernten Schmutz ab, wodurch nicht nur eine Staubentwicklung praktisch von Anfang an unterbunden ist, sondern in vorteilhafter Weise gleichzeitig auch eine automatische Schmutzabführung gewährleistet ist. Gleichzeitig ist es hierbei möglich, die zu reinigenden Rodungsfrüchte zunächst in einem Flüssigkeitsbad einzuweichen, was die nachfolgende Schmutzentfernung erleichtert. Bei den auf die Rodungsfrüchte auftreffenden Flüssigkeitsstrahlen handelt es sich zudem um vergleichsweise harte Strahlen, so dass auch fest anhaftender Schmutz zuverlässig gelockert und abgesprengt wird. Die erfindungsgemässen Massnahmen ermöglichen somit in vorteilhafter Weise einen hohen Durchsatz an zu reinigenden Rodungsfrüchten, so dass das Arbeitstempo der Erntemaschine durch den Reinigungsprozess nicht beeinträchtigt wird.

Die erfindungsgemässe Lösung der vorrichtungsmässigen Aufgabe besteht ausgehend von einer Vorrichtung mit mindestens einer, vorzugsweise auf einem mit einer Rodeeinrichtung versehenen Erntegerät angeordneten, mit Rodungsfrüchten im Durchlaufbetrieb beschickbaren Reinigungsstation, die mit peripher angeordneten, nach innen gerichteten Strahldüsen versehen ist, darin, dass die Strahldüsen der Reinigungsstation, die oberhalb einer einen Flüssigkeitsauslass aufweisenden Auffangeinrichtung für Reinigungsrückstände angeordnet ist, durch eine Flüssigkeitspumpe beaufschlagbar sind, der saugseitig eine Flüssigkeitsgewinnungsanlage vorgeordnet ist.

Gemäss einer bevorzugten Weiterbildung der übergeordneten Massnahmen kann die Reinigungsflüssigkeit zumindest teilweise durch Entsaften der beim Roden von den Früchten zu trennenden, vor dem Entsaften vorzugsweise vermusten pflanzlichen Produkte gewonnen werden. Die Flüssigkeitsgewinnungsanlage ist hierbei vorteilhaft als vorzugsweise kontinuierlich arbeitende, durch eine vorzugsweise als Häcksler ausgebildetes Kraut- bzw. Blattförderorgan mit den beim Roden von den Früchten getrennten, pflanzlichen Produkten beaufschlagbare, vorzugsweise einer Filtereinrichtung vorgeordnete Saftpresse ausgebildet, deren Ausgang für ausgepresstes Gut mit einer vorzugsweise auswechselbaren Ausbringdüse versehen ist und deren Flüssigkeitsausgang mit der den Strahldüsen zugeordneten Flüssigkeitsversorgungseinrichtung verbunden ist. Diese Massnahmen erweisen sich vor allem beim Reinigen von Rüben als vorteilhaft, da hier ausreichend Blatt- bzw. Stengelmaterial und dergleichen mit einem verhältnismässig hohen Wassergehalt zur Entsaftung zur Verfügung stehen. In vielen Fällen deckt dabei, wie Versuche gezeigt haben, das durch Entsaften gewonnene Wasser den gesamten, bei einmaliger Verwendung des Wassers sich ergebenden Bedarf. Eine Aufbereitung des Wassers kann hierbei in vorteilhafter Weise entfallen, was sich vorteilhaft auf den gerätetechnischen Aufbau auswirkt. Gleichzeitig ist sichergestellt, dass diesen pflanzlichen Neben- bzw. Abfallprodukten bereits auf dem Felde jedenfalls der grösste Teil des Wassers entzogen wird, so dass praktisch bereits haltbares oder jedenfalls leicht haltbar machbares Trockenfutter anfällt, das in vorteilhafter Weise viele Ballaststoffe enthält. Die bisher übliche, aus umweltschützerischen Gründen jedoch vielfach unerwünschte Silage von Rübenblatt und dergleichen kann daher in vorteilhafter Weise entfallen. Gleichzeitig entfällt dabei in vorteilhafter Weise auch die beim Verfüttern von Silage zu befürchtende Übersäuerung des Magens der hiermit gefütterten Tiere.

Aus der DE-U-7 727 630 ist zwar eine Rübenerntemaschine bekannt, die eine Häckselvorrichtung für das Rübenblattmaterial aufweist. Bei dieser bekannten Anordnung wird das gehäckselte Material jedoch nicht entsaftet, sondern im unentsafteten Zustand abgelegt bzw. aufgesammelt.

Dasselbe gilt für die vom jeweils weiter zu verarbeitenden Rübenteil abgetrennten Köpfe, die ungehäckselt in einem Bunker aufgenommen werden sollen. Hieraus konnte demnach keine Anregung zur erfindungsgemässen Verbesserung des gattungsmässigen Standes der Technik entnommen werden.

Nachstehend ist ein Ausführungsbeispiel der Erfindung anhand der Zeichnung näher erläutert. Hierbei zeigen:

Fig. 1 eine schematische Darstellung eines Rübenerntegeräts mit einer eingebauten Flüssigkeitsreinigungsvorrichtung,

Fig. 2 die Flüssigkeitsreinigungsvorrichtung im Detail anhand eines Blockschaltbilds und

Fig. 3 ein Ausführungsbeispiel mit einer Saftpresse.

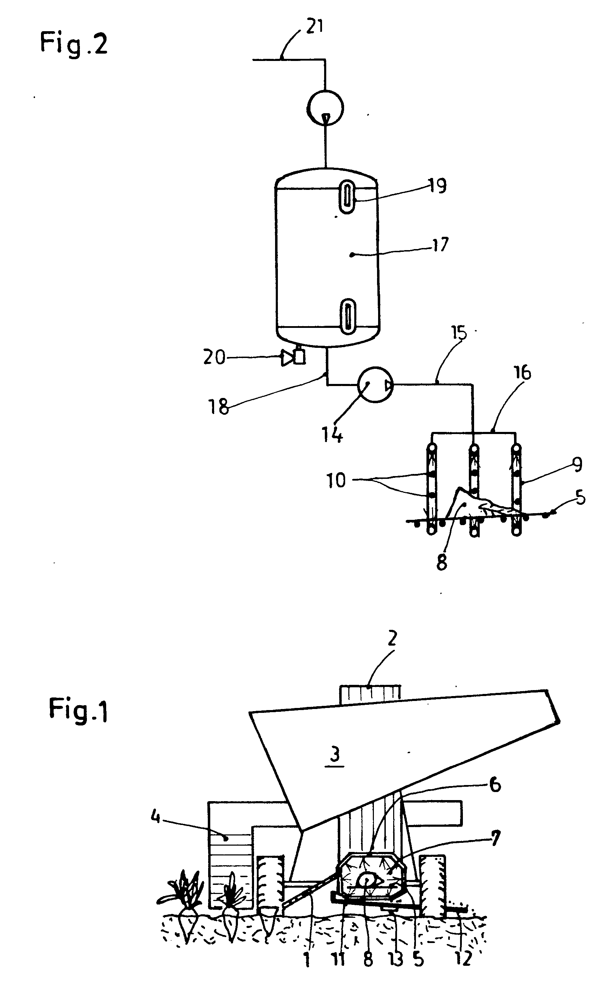

Das in Fig. 1 dargestellte Rübenerntegerät ist in an sich bekannter Weise mit hier nicht näher ausgeführten Köpf- und Rodeeinrichtungen versehen. Die geköpften Rüben werden mittels eines bei 1 angedeuteten Transportbands einem Elevator 2 zugeführt und mit Hilfe des Elevators 2 in einen Bunker 3 eingebracht. Die mit Blättern besetzten Rübenköpfe werden von einem bei 4 angedeuteten Transportband aufgenommen und im Erntezustand oder in einem weiter unten noch näher zu beschreibenden Verarbeitungszustand ebenfalls in einen Bunker eingebracht oder einfach seitlich neben dem Erntegerät abgelegt. Die gerodeten Rüben werden auf ihrem Weg zum Elevator 2 mit Wasserstrahlen beaufschlagt, welche das anhaftende Erdreich absprengen und wegschwemmen. Hierzu ist im dargestellten Ausführungsbeispiel eine von einem Transportband 5 durchsetzte, als Ganzes mit 6 bezeichnete Reinigungsstation vorgesehen, die kranzförmig angeordnete Strahldüsen aufweist, mit welchen die zu reinigenden Rüben während ihres Durchlaufs durch die Reinigungsstation 6 allseitig beaufschlagt werden können. Die bei 7 angedeuteten Wasserstrahlen werden dabei kontinuierlich aufrechterhalten, was einen hohen Durchsatz der bei 8 angedeuteten, auf dem Transportband 5 aufliegenden Rüben ermöglicht und eine Steuerung entbehrlich macht.

Die Reinigungsstation 6 kann, wie Fig. 2 anschaulich erkennen lässt, einfach aus mehreren, käfigartig nebeneinander angeordneten Ringleitungen 9 bestehen, die im Bereich ihres inneren Umfangs mit etwa durch einfache Bohrungen gebildeten Strahldüsen 10 versehen sind. Das Transportband 5 kann einfach, wie Fig. 2 weiter erkennen lässt, durch einen bewegbaren Gitterrost gebildet werden, so dass die hierauf aufgenommenen Rüben 8 allseitig beaufschlagbar sind und das hiervon ablaufende Wasser ungehindert abfliessen kann. Bei dem in Fig. 1 dargestellten Ausführungsbeispiel ist unterhalb der Reinigungsstation 6 eine Auffangwanne 11 angebracht, deren Boden zu einer Abflussrinne 12 hineingeneigt ist, über welche das verbrauchte Wasser und der hiervon mitgeführte Schmutz einfach seitlich neben dem Fahrwerk auf der den Köpf- und Rodeeinrichtungen gegenüberliegenden Geräteseite auf den Ackerboden abfliessen kann. Die Auffangwanne 11 und die Rinne 12 können mittels eines Vibrators 13 in leichte Schwingungen versetzt werden, so dass auch auf dem Wannenboden sich absetzende Schmutzteilchen zuverlässig abtransportiert werden. Zur kontinuierlichen Wasserversorgung der Strahldüsen 10 ist eine in Fig. 2 bei 14 angedeutete Hochdruckpumpe vorgesehen, deren Druckstutzen 15 über Stichleitungen 16 an die käfigartig nebeneinander angeordneten, mit Strahldüsen 10 besetzten Ringleitungen 9 angeschlossen ist. Zur Bildung eines Wasserreservoirs ist ein entweder direkt auf dem Rübenerntegerät oder der dieses ziehenden Zugmaschine montierbarer Tank 17 vorgesehen, an den die Hochdruckpumpe 14 mit ihren Saugstutzen 18 freisaugend angeschlossen sein kann, so dass sich keine Unterbrechungen des Pumpbetriebs ergeben. Der Wassertank 17 ist zur Kontrolle des Füllungsstands mit Schaugläsern 19 versehen. Es wäre aber auch denkbar, eine automatische Überwachungseinrichtung vorzusehen, die beim Absinken des Füllungsstands unter einen vorgegebenen Mindestwert mittels einer Hupe 20 oder dergleichen ein Warnsignal abgibt.

Der mit einem Füllstutzen 21 versehene Tank 17 wird laufend mit aus der Umgebung gewonnenem Wasser nachgefüllt. Zur Gewinnung von Wasser aus der Umgebung ist eine Wassergewinnungsanlage vorgesehen, deren Wasserauslass mit dem Füllstutzen 21 verbunden ist. Sofern die Kapazität der Wassergewinnungsanlage zur Deckung des vollen Bedarfs nicht ausreicht, kann ein Teil der verbrauchten Reinigungsflüssigkeit aufgefangen und aufbereitet und zur nochmaligen Verwendung ebenfalls dem Tank 17 zugeführt werden.

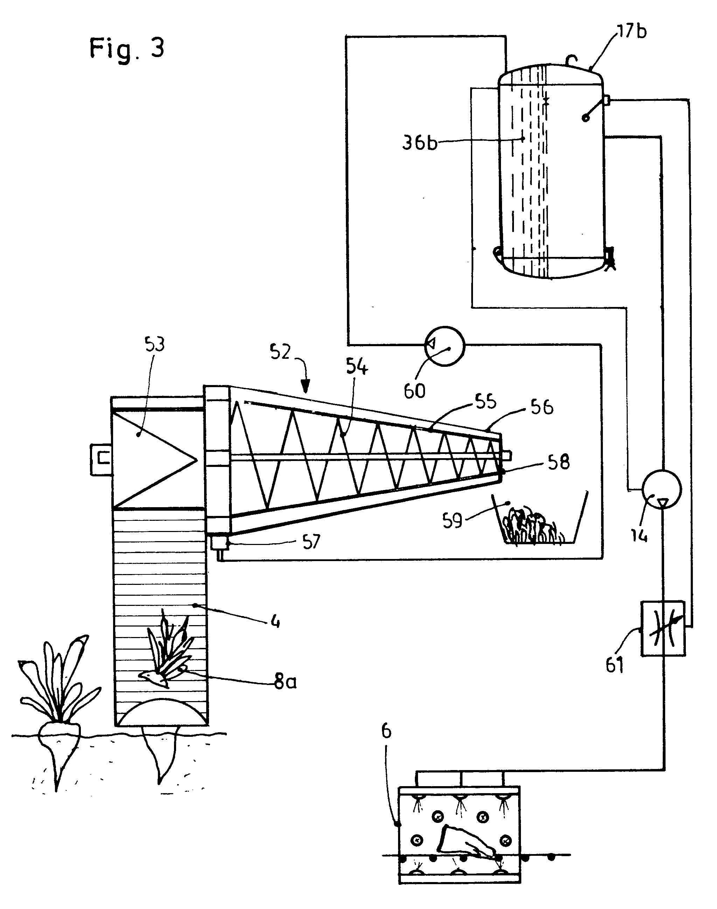

Eine derartige Wassergewinnungsanlage kann etwa der Umgebungsluft das hierin gelöste Wasser entziehen, das in Form von Kondenswasser anfällt. Hierzu wird einfach eine Kondensatorfläche mit entsprechend niedriger Temperatur benötigt. Bei dem in Fig. 3 dargestellten Ausführungsbeispiel wird aus den beim Ernten von Rüben anfallenden Blättern und Köpfen, die zum grössten Teil aus Wasser bestehen, Wasser gewonnen, das nicht nur die im Falle einer Wiederaufbereitung des Wassers entstehenden Verluste deckt, sondern das auch für den bei einem offenen Wasserkreislauf sich ergebenden Wasserbedarf ausreicht.

Hierzu ist eine in Fig. 3 als Ganzes mit 52 bezeichnete, von dem der Köpfeinrichtung nachgeordneten Transportband 4 mit von den Rüben abgetrennten, mit Blättern besetzten Köpfen 8a beaufschlagte Saftpresse vorgesehen. Der Saftpresse 52 ist zweckmässig eine Verkleinerungs- bzw. Vermusungseinrichtung, hier in Form eines Häckslers 53 vorgeordnet. Sofern der Saftpresse 52 ein ausreichend grosser Flüssigkeitspuffer nachgeordnet ist, kann diese diskontinuierlich arbeiten. Im dargestellten Ausführungsbeispiel ist eine kontinuierlich arbeitende Saftpresse vorgesehen. Diese besteht aus einer in Transportrichtung sich verjüngenden Schnecke 54, die in einem Siebgehäuse 55 gelagert ist, welches von einem geschlossenen Mantelgehäuse 56 umgeben ist, das mit einem Wasserauslaufstutzen 57 versehen st. Am verjüngten Ende der Schnecke 54 ist eine Ausbringdüse, hier in Form einer auswechselbaren Lochscheibe 58 vorgesehen. Die ausgepressten Feststoffe lassen sich somit in kleine Pellets, Cops oder dergleichen pressen, die direkt verfüttert oder leicht getrocknet und damit konserviert werden können. Zu ihrer Aufnahme ist im dargestellten Ausführungsbeispiel ein Behäter 59 vorgesehen, der von Zeit zu Zeit einfach auf einen am Rand des Ackers abgestellten Wagen entleert wird.

Sofern die Filterwirkung des Siebgehäuses 55 fein genug ist, kann der Auslass 57 direkt an einer Pumpe zur Beaufschlagung der Reinigungsstation 6 liegen. Im dargestellten Ausführungsbeispiel wird das aus der Saftpresse 52 ablaufende Wasser einer Filterstation 36b zugeführt, die in einen Wassertank 17b integriert ist. Sofern der Wassertank 17b nicht direkt unterhalb der Saftpresse 52 angeordnet werden kann, wird das hieraus ablaufende Wasser einfach mittels einer Niederdruckpumpe, wie in Fig. 5 bei 60 angedeutet, dem mit einer Filterstation 36b versehenen Wassertank 17b zugeführt, an den der Saugstutzen der die Reinigungsstation beaufschlagenden Pumpe angeschlossen ist. Im dargestellten Ausführungsbeispiel ist hierzu eine Hochdruckpumpe 14 vorgesehen, welcher eine Drossel 61 nachgeschaltet ist.

## Patentansprüche

1. Verfahren zur Feldreinigung von Rodungsfrüchten, insbesondere Zuckerrüben, die nach der Rodung durch Strahlen eines Reinigungsmittels allseitig beaufschlagt werden, dadurch gekennzeichnet, dass das Reinigungsmittel zum überwiegenden Teil eine Flüssigkeit, vorzugsweise Wasser, ist, die zumindest teilweise während des Rodevorgangs mittels einer Gewinnungsanlage aus der Umgebung gewonnen und in den Reinigungsprozess eingespeist wird.

2. Verfahren nach Anspruch 1, dadurch gekennzeichnet, dass Reinigungsflüssigkeit als Kondenswasser aus der Umgebungsluft gewonnen wird.

3. Verfahren nach einem der vorhergehenden Ansprüche, dadurch gekennzeichnet, dass Reinigungsflüssigkeit durch Entsaften der beim Roden von den Früchten zu trennenden, vor dem Entsaften vorzugsweise vermusten pflanzlichen Produkten gewonnen wird.

4. Vorrichtung zur Durchführung des Verfahrens nach Anspruch 1, mit mindestens einer, vorzugsweise auf einem mit einer Rodeeinrichtung versehenen Erntegerät angeordneten, mit Rodungsfrüchten im Durchlaufbetrieb beschickbaren Reinigungsstation (6), die mit peripher angeordneten, nach innen gerichteten Strahldüsen (10) versehen ist, dadurch gekennzeichnet, dass die Strahldüsen (10) der Reinigungsstation (6), die oberhalb einer einen Flüssigkeitsauslass (12) aufweisenden Auffangeinrichtung (11) für Reinigungsrückstände angeordnet ist, durch eine Flüssigkeitspumpe (14) beaufschlagbar sind, der saugseitig eine Flüssigkeitsgewinnungsanlage vorgeordnet ist.

5. Vorrichtung nach Anspruch 4, dadurch gekennzeichnet, dass die Flüssigkeitsgewinnungsanlage als vorzugsweise kontinuierlich arbeitende, durch ein vorzugsweise als Häcksler ausgebildetes Kraut- bzw. Blattförderorgan (4) mit den beim Roden von den Früchten getrennten pflanzlichen Produkten beaufschlagbare, vorzugsweise einer Filtereinrichtung (36b) vorgeordnete Saftpresse (52) ausgebildet ist, deren Ausgang für ausgepresstes Gut mit einer vorzugsweise auswechselbaren Ausbringdüse (58) versehen ist und deren Flüssigkeitsausgang (57) mit der den Strahldüsen (10) zugeordneten Flüssigkeitsversorgungseinrichtung verbunden ist.

6. Vorrichtung nach Anspruch 5, dadurch gekennzeichnet, dass die Saftpresse (52) als Schnecke (54) mit in Förderrichtung sich verjüngendem Querschnitt ausgebildet ist, die in einem Siebgehäuse (55) gelagert ist, das von einem nach aussen geschlossenen Mantelgehäuse (56) umgeben ist, das mit einem Flüssigkeitsausgang (57) versehen ist.

## Claims

1. A method of cleaning root crops, more specially sugar beet, in the field, using jets of a cleaning fluid acting on the crop from all sides after harvesting, characterized in that the cleaning fluid is mostly in the form of a liqid, water being preferred, that is at least partly got at the time of the root harvesting operation using an apparatus therefor, from the surroundings and is supplied for use in the cleaning operation.

2. The method as claimed in claim 1 characterized in that the cleaning liquid is got from the surrounding air as water of condensation.

3. The method as claimed in claim 1 or claim 2 characterized in that the cleaning liquid is got by extracting juice from plant material that is to be separated from the said crop and is more specially mushed before extracting the juice.

4. An apparatus for use in the method as claimed in claim 1 comprising at least one cleaning (6) station that is more specially placed on a harvester having a crop digger, said station being able to take up the said crop so that the same may be continuously run through it, said station having inwardly pointing jet producing means (10) that are placed peripherally thereon characterized in that the jet producing means (10) of the cleaning station (6), that are positioned at a higher level than a take up unit (11) with a liquid outlet (12), said unit being for residues produced on cleaning, are supplied by a liquid pump (14), whose intake side is joined up with a liquid producing unit.

5. The apparatus as claimed in claim 4 characterized in that the liquid producing unit is in the form of a juice press (52), more specially designed for continuous operation, and designed to be supplied by a haulm or foliage conveying part (4) that is more specially designed in the form of a straw cutter, said press being able to be supplied with plant products separated from the said crop on digging same and more specially having a filter unit (36b) on the inlet side thereof, said press having an outlet nozzle (58) for extract residue, said nozzle preferably being able to be taken off and having a liquid outlet (57) joined up with the liquid supply unit for said jet producing means (10).

6. The apparatus as claimed in claim 5 characterized in that the juice press (52) is in the form of a screw (54) with a cross section decreasing in the direaction of transport, said screw (54) being bearinged in a perforated housing (55), that is placed within a casing (56) shutting it off from the outside and having a liquid outlet (57).

**Revendications**

1. Procédé pour le nettoyage sur champ des fruits déterrés, particulièrement les betteraves sucrières, qui, après arrachage, sont arrosés de tous les côtés par un agent de nettoyage, caractérisé en ce que l'agent nettoyeur est prépondéramment un liquide, de préférence de l'eau, étant au moins partiellement recueilli de l'environnement au cours de l'arrachage au moyen d'une installation de récupération, puis alimenté au procédé de nettoyage.

2. Procédé suivant revendication 1, caractérisé en ce que le liquide de nettoyage est recueilli de l'air ambiant sous forme d'eau de condensation.

3. Procédé suivant l'une des revendications précédentes, caractérisé en ce que le liquide de nettoyage est recuilli par pressage des produits végétaux à séparer des fruits au cours de l'arrachage, ces produits étant préférentiellement broyés avant pressage.

4. Dispositif pour la réalisation du procédé suivant revendiaction 1, comprenant au moins une station de nettoyage (6) préférentiellement installée sur un appareil récolteur équipé d'un dispositif d'arrachage pouvant être alimenté continuellement en fruits déterrés, cette station étant équipée d'arroseurs périphériques (10) dirigés vers l'intérieur, caractérisé en ce que les arroseurs à jet (10) de la station de nettoyage (6) disposée au-dessus d'un dispositif de récolte (11) des déchets de nettoyage muni d'une sortie de liquide (12), peuvent être alimentés par une pompe à liquide (14) raccordée par son côté d'aspiration à une installation de récupération de liquide.

5. Dispositif suivant revendication 4, caractérisé en ce que l'installation de récupération de liquide est conçu comme une presse à jus (52) préférentiellement à marche continue, préférentiellement placée avant une installation de filtration (36b) pouvant être alimentée en produits végétaux séparés des fruits au cours de l'arrachage via un élément transporteur d'herbes ou de feuilles (4) préférentiellement conçu comme hacheuse, la décharge de matière pressée de cette presse étant préférentiellement munie d'un ajutage de sortie (58) échangeable et sa sortie de liquide (57) étant reliée à l'installation d'amenée de liquide qui alimente les arroseurs à jet (10).

6. Dispositif suivant revendication 5, caractérisé en ce que la presse à jus (52) est conçue comme une vis (54) à section conique dont le diamètre diminue dans le sens d'avancement de la matière, logée dans une cage-tamis (55) entourée par une enveloppe fermée (56) vers l'extérieur et munie d'une sortie de liquide (57).

Fig.2

Fig.1

# Fig. 3